# EUROPEAN PATENT SPECIFICATION

(11) **EP 4 335 715 B1**
(45) Date of publication and mention of the grant of the patent: **29.10.2025**
(21) Application number: 23195667.3
(22) Date of filing: 06.09.2023
(51) Int. Cl.: B61B 12/00, B62H 3/12

(54) **CABIN ASSEMBLY FOR AN AERIAL CABLE TRANSPORTATION SYSTEM PROVIDED WITH A DEVICE FOR TRANSPORTING SPORTS EQUIPMENT OR PASSENGER PERSONAL BELONGINGS AND AERIAL CABLE TRANSPORTATION SYSTEM COMPRISING AT LEAST SUCH A CABIN ASSEMBLY**
KABINENANORDNUNG FÜR EIN LUFTSEILTRANSPORTSYSTEM MIT EINER VORRICHTUNG ZUM TRANSPORT VON SPORTAUSRÜSTUNGEN ODER PASSAGIEREN UND LUFTSEILTRANSPORTSYSTEM MIT MINDESTENS EINER SOLCHEN KABINENANORDNUNG
ENSEMBLE CABINE POUR UN SYSTÈME DE TRANSPORT PAR CÂBLE AÉRIEN DOTÉ D'UN DISPOSITIF DE TRANSPORT D'ÉQUIPEMENT SPORTIF OU PERSONNEL ET SYSTÈME DE TRANSPORT PAR CÂBLE AÉRIEN COMPRENANT AU MOINS UN TEL ENSEMBLE CABINE

(30) Priority: 08.09.2022 IT 202200018336
(43) Date of publication of application: 13.03.2024
(73) Proprietor: LEITNER S.p.A., 39049 Vipiteno (BZ) (IT)
(72) Inventor: FISCHNALLER, Hannes, 39049 Vipiteno (BZ) (IT); ERHARTER, Nikolaus, 39049 Vipiteno (BZ) (IT)
(74) Representative: Studio Torta S.p.A.

(56) References cited:
- EP-A1- 3 927 592
- EP-B1- 3 317 171
- FR-A1- 2 958 255
- JP-A- 2016 168 901

## Description

### Cross-Reference to Related Patent Applications

This patent application claims priority from Italian patent application no. 102022000018336 filed on September 8, 2022.

### Technical field

The technical field of this invention relates to aerial cable transportation systems wherein the passengers are transported along a predefined path inside a transport unit in the form of cabins moved in succession, one behind the other. The term "aerial" refers to those systems wherein the cabins travel suspended in the void, in other words raised in relation to the ground below, supported and potentially hauled by at least one cable. Within this specific technical field, this invention relates to a cabin assembly comprising a cabin and a device for supporting and transporting sports equipment or personal belongings of the passengers (such as, for example, bicycles, outdoor go-karts, sleds, bobsleds, etc.) coupled outside the cabin itself. In this context, this invention deals with the technical issue of how to reconcile two different requirements, **i.e.,** on the one hand, how to ensure safe transport and easy loading/unloading of the above-mentioned sports equipment or personal belongings of the passengers and, on the other hand, how to limit the size of the cabin assembly once stored to optimise space.

### State of the art

As mentioned in the preceding chapter, the reference technical field for this invention is that of aerial cable transportation systems. The person skilled in the art knows these types of systems very well and, as known, these systems comprise multiple transport units that are moved one after the other along a path defined by at least one cable. For the purposes of this description, "transport units" means a cabin, **i.e.,** a closed volume delimited by a floor, a roof, and one or more side walls wherein there is at least one mobile door for passengers to embark and disembark. An aerial cable system may be of different types. For example, the system may be of the single-cable type, wherein a single cable is present and performs the double function of supporting (supporting cable) and moving (hauling cable) the cabin. In other systems, the support and tow functions are divided between different cables and involve, thus, one or more support cables (for example, two support cables) and one hauling cable. In other systems, there may only be support cables and the forward movement of the cabins is delegated to different means, for example motorised trolleys. The systems comprise terminal stations at the ends of the path, possibly intermediate stations and fixed structures like pylons or towers to support the cable in spans. As known, in the stations, the passengers can safely embark and disembark from the cabins. To this end, inside the stations, the cabins are usually unhooked from the cables and moved/supported by other devices so as to be able to move slowly forward without slowing down the remaining cabins travelling beyond the station along the path. For the purposes of this invention, it is not significant which device (cable or not) moves the cabins nor the number of supporting cables nor whether the embarking and disembarking at the station occurs with still or slowly moving cabins.

As anticipated, this invention relates to a cabin assembly comprising a cabin and at least one device for transporting sports equipment or personal belongings of the passengers, such as bicycles, outdoor go-karts, sleds, bobsleds, etc., coupled to the outside of the cabin to enable passengers to transport the above-mentioned sports equipment or personal belongings along the path defined by the system. In fact, as known with the aerial cable transportation systems both people and personal sports equipment are transported. For example, recently, the transport of bicycles significantly increased because, with these systems, users can comfortably reach high-altitude stations and descend the valley using their own bicycles. Although bicycles are very bulky objects and, in general, difficult to transport, they may be transported inside cabins without particular problems (of course, if the dimensions of the cabin allow this). This transport inside the cabin, in any case, is not without drawbacks. In fact, in small cabins, for example cabins with six/eight passenger places, the transport of bulky bikes, such as, for example, e-bikes, is only sometimes possible or even impossible. In any case, even if transport were possible without issues of bulkiness (for example with cabins with 10 passenger places), the presence of the bicycle enormously limits the space available for transporting other people. In the event that 2-3 people also transport their bicycles, all the space available in a cabin with 10 places is used up, thus reducing the passenger carrying capacity by 70-80%.

To overcome these drawbacks, today it is known to equip cabins with transport devices for bicycles coupled outside the cabin. In general, these transport devices for bicycles comprise a retaining assembly for a bicycle wheel configured precisely to receive a wheel and stably retain it. As will become clear, this invention is not limited to a specific retaining assembly but to its interaction with the cabin. By way of example, some examples of retaining assemblies for a bicycle wheel are described below that will help to better understand the example shown in the attached figures.

A first example of a known retaining assembly involves just one lower retaining device in the form of two parallel plates in which the front wheel of the bicycle is inserted once vertically raised or lifted up from the ground. The first ends of the two plates are bound to the frame of the cabin, while the opposite ends are joined by a rear support device ("rear" indicates the contact with a rear portion of the wheel when inserted between the plates). The front portion of the wheel directly abuts against the frame of the cabin or is supported by a front support device between the plates near the cabin. This solution, which involves, as described, just one lower, fixed retaining device, has the drawback of not providing for adjustments when the wheel radius changes and, in this sense, the transport may be more or less stable depending on the type of bicycle transported. More sophisticated systems involving also other support devices are also known today, for example a lower support device placed between the rear one and the front one. However, in this case too, the single lower, fixed retaining device does not adapt to the various possible sizes of the wheels. To overcome this issue, EP3317171 describes a retaining assembly wherein in addition to the lower, fixed retaining device, there is also an upper, mobile retaining device hinged to the frame of the seat that, due to the weight of the wheel, closes like pincers on the wheel when transported. This upper, mobile retaining device comprises an upper support device acting higher on the wheel and is driven by a lever mechanism or articulated connection fixed to the lower retaining device. This solution, although it adapts to different-sized wheels and ensures their stable and secure transport, is not without drawbacks. In fact, the presence of the upper retaining device and of its upper support device, which acts on the upper portion of the wheel like pincers does not facilitate the manoeuvres for loading and unloading the bicycle. Finally, the Applicant has also, in the past, devised an innovative retaining device for transporting bicycles composed, on the one hand, of a small number of pieces and, on the other, able to ensure the safe and stable transport of different-sized bicycles without requiring significant effort from the passengers during the loading and unloading procedures. EP3984866, in the name of the Applicant, describes this retaining device that is suggested again here as a preferred example in a new method for coupling with a cable transport system cabin.

Unfortunately, even the current bicycle transport devices placed outside the cabins are not without drawbacks. In order to enable the easy loading/unloading of bicycles and a safe transport, the retaining devices are coupled overhanging a wall of the cabin at such a distance from the cabin so as to avoid parts of the bicycle from hitting the cabin. This distance, in fact, is necessary for enabling both the opening of the doors and the positioning of the bikes without parts of the latter (pedals or handlebars, for instance) touching, or scratching, or damaging the outer frame of the cabin. This distance is, in addition, required by the fact that the loading/unloading occurs with moving cabins and with very little time available. Although this big distance between retaining devices and cabin is highly advantageous during loading/unloading, it is disadvantageous when the cabins are to be returned to the storage. The cabins, in fact, must be stored with a minimum distance between them to optimise the volume of the depot and the above-mentioned retaining devices significantly increase the bulkiness. This means that, today, the retaining devices must be disassembled before the cabins are stored or there must be more space in the storage.

All the drawbacks highlighted, with reference to the transport of bicycles, are also present in the transport of other sports equipment or personal belongings of the passengers. In this sense, this invention is not limited to the problem of transporting only bicycles and the latter are to be considered as an example of sports equipment or personal belongings of the passengers.

EP3317171 describes a device for holding or transporting bicycles comprising an upper support and a lower support for a bicycle wheel; wherein the upper support can rotate around a pin.

FR2958255 describes a device for supporting a bicycle mounted on a mechanical thrust device, for example on a device of the chairlift type.

### Description of the invention

Starting from this prior art, one purpose of this invention is to provide a cabin assembly for an aerial cable transportation system capable of overcoming the drawbacks listed in the previous section. In particular, this invention has the purpose of providing a cabin assembly able to reconcile two different requirements, in other words, on the one hand, enabling safe transport and easy loading/unloading of sports equipment or personal belongings of the passengers such as bicycles, outdoor go-karts, sleds, bobsleds, etc., and, on the other hand, minimising the bulkiness of the cabin assembly, when necessary, for example for storing it.

In accordance with these purposes, this invention relates to a cabin assembly for an aerial cable transportation system; wherein the cabin assembly comprises:
- a cabin; and
- at least one device (claimed as the transport device) configured to support sports equipment or personal belongings of the passengers (such as bicycles, outdoor go-karts, sleds, bobsleds, etc.) and, thus, enable the user to transport this sports equipment or these personal belongings with them while they use the aerial cable transportation system.

According to the invention, the support and transport device for the sports equipment or personal belongings of the passengers is coupled externally to the cabin so that the passenger carrying capacity inside the cabin is not compromised. In particular, the cabin comprises a roof, a floor, and one or more side walls (usually one if the cabin has a circular plan) and the support and transport device for the sports equipment or personal belongings of the passengers is coupled overhanging a side wall of the cabin (usually the one equipped with a mobile embarking/disembarking door).

According to the invention, the support and transport device for the sports equipment or personal belongings of the passengers comprises at least one retaining assembly (that may be, in itself, of various shapes including known ones) overhanging in relation to the cabin and configured to stably accommodate and hold the sports equipment or personal belongings of the passengers. In the case of a bicycle, the retaining assembly is configured to be coupled with a bicycle wheel. As will be clear, according to this invention, the support and transport device for the sports equipment or personal belongings of the passengers may comprise just one or two retaining assemblies. In the example of transporting bicycles, if just one retaining assembly is present, this is intended for accommodating the front wheel of the bicycle (the one close to the handlebars). If two retaining assemblies are present, these are, respectively, configured to receive both the wheels of the bicycle (the rear one may also be a simple rest).

Everything described up to this point with reference to the transport of bicycles is also common to the prior art; in other words, it is known to provide a cabin and at least one retaining assembly for a bicycle wheel coupled externally to the cabin overhanging a wall of the cabin itself. The term "coupled" means both the possibility of direct coupling and the possibility of providing intermediate elements (such as the outer frame type that will be described below) that connect the cabin to the retaining assembly.

The retaining assembly (not limited to bicycles only but may have any shape to accommodate various kinds of sports equipment or different personal belongings of the passengers) is mobile in relation to the cabin supporting it so that it may be selectively switchable between at least two positions, such as:
- a distal position from the cabin (i.e., the position usually fixed today) to enable the user to easily load and unload sports equipment or personal belongings of the passengers, as well as to safely transport these, avoiding collisions between what is transported and the cabin; and
- a position proximal to the cabin (a new possibility now offered by this invention) to minimise the bulkiness of the cabin assembly, when necessary, for example when storing the cabin assembly.

"Proximal position" means, in general, any position closer to the cabin starting from the distal position but preferably it means a very close position in which it would not be possible to load the sports equipment or personal belongings of the passengers without hitting the cabin.

Obviously, to enable the retaining assembly to selectively reach the above-mentioned positions, the transport device comprises a support assembly with at least some mobile parts acting as a bridge between the cabin and the retaining assembly and that are configured precisely to handle and guide the retaining assembly from the first to the second position and vice versa.

This mobile-bridge support assembly connecting the cabin and the retaining assembly is made in the form of an articulated quadrilateral support (preferably an articulated parallelogram) in which the portion known as a bridge (fixed part) is integral with the cabin and basically vertical, the rod portion opposite the bridge is also basically vertical and supports the retaining assembly and the first and second handle connect the ends of the bridge to that of the rod. Thus, the rod makes a rotational-translational movement in relation to the cabin, always remaining parallel to the bridge so that the retaining assembly is also always oriented correctly when moving.

As will be shown in the embodiment of this invention referring to the attached drawings, the transport device may comprise an outer frame externally bound to the cabin so that the retaining assembly is coupled to the cabin via the outer frame.

The outer frame comprises at least one vertical tubular body connected to the roof and to the floor of the cabin by means of an upper plate and a lower plate that are integral with the ends of the vertical tubular body. Advantageously, in this way, the assembly of the transport device on the cabin is very simple (you just need to fix the above-mentioned plates to the cabin) and, in addition, the invention is also compatible and usable with existing systems already operating.

The coupling of the upper plate to the roof of the cabin is, preferably, of the spring mounted kind by means of at least one spring placed between the roof and the plate. This solution is advantageous because it makes it possible to absorb the vibrations that are generated in transport and avoid the transfer of the forces and these vibrations inside the cabin.

The outer frame preferably comprises two parallel vertical tubular bodies that extend from the roof to the floor of the cabin along a side wall and at least two parallel horizontal tubular bodies that connect the vertical tubular bodies and that represent the ends of the bridge portion of the quadrilateral structure described above.

Finally, this invention also refers explicitly to a retaining assembly configured to transport a bicycle and such a (non-limiting) example shall be shown in the figures. For completeness, this invention also relates to every aerial cable transportation system comprising at least one cable and at least one cabin assembly as the subject of the attached claims.

For construction details of the retaining assembly for bicycles shown in the attached figures, please refer to EP3984866 in the name of the Applicant in which the structure of the assembly itself is described.

### List of drawings

Additional features and advantages of this invention will be clear from the description that follows of a non-limiting embodiment, with reference to the attached figures, in which:
- Figure 1 shows a schematic view of an example of an aerial cable system that can be equipped with the cabin assembly according to this invention;
- Figure 2 shows the schematic perspective view of an example of a cabin assembly according to this invention;
- Figures 3 and 4 show two different possible configurations of the cabin assembly in Figure 2 according to this invention;
- Figures 5 and 6 show enlarged details of the cabin assembly in Figure 2 according to this invention;
- Figure 7 shows a construction detail according to this invention.

### Description of an embodiment of the invention

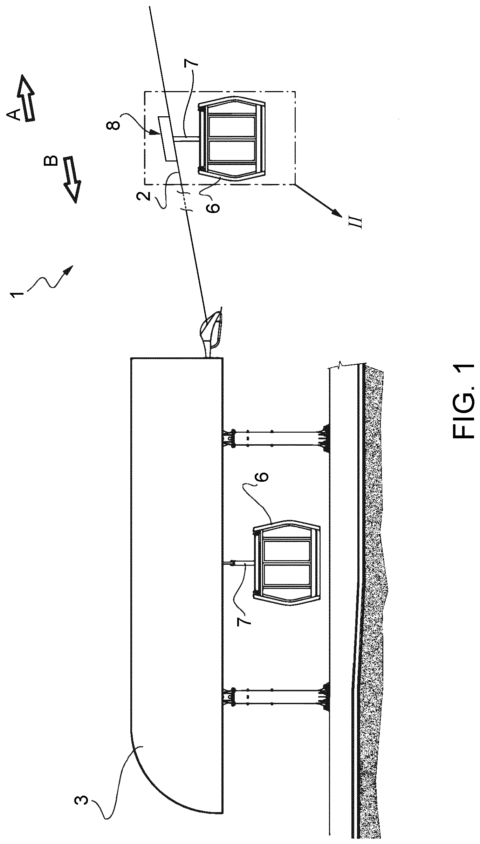

As indicated in the previous section, this invention refers to a cabin assembly for an aerial cable transportation system in which it is possible to also transport sports equipment or personal belongings of the passengers. Figure 1 shows a schematic view of an example of an aerial cable system that can be equipped with the cabin assembly according to this invention. Figure 1 shows an aerial cable system 1 with a cable 2 that performs the dual function of supporting and hauling cabins 6 moved along the path. The reference number 3 identifies a station inside which the passengers embark and disembark from the cabins 6 as well as loading and unloading the above-mentioned sports equipment and personal belongings. The reference number 7 indicates a suspension arm that connects the cabin 6 to a clamp 8 coupled to the cable 2. The arrows A and B indicate that the cabins 6 may travel in both directions of the system.

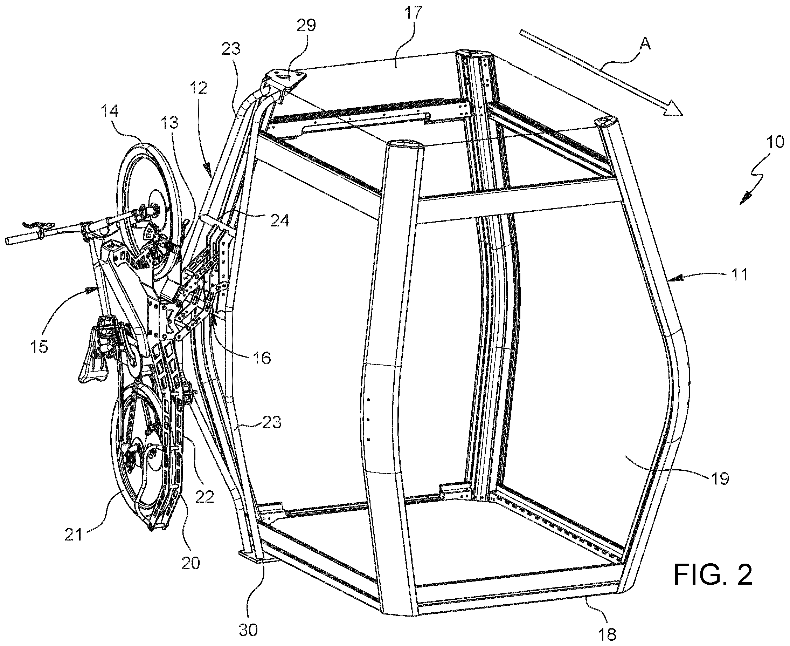

Figure 2 shows an enlargement of the portion II in Figure 1, i.e., a schematic perspective view of an example of a cabin assembly 10 according to this invention. In this (non-limiting) example, the cabin is configured to transport a bicycle as an example of the possible sports equipment or personal belongings of the passengers. Obviously, when what is transported changes, the form of the structure of this invention also changes to better transport what is desired. This figure shows a cabin 11 comprising a wall of the roof 17, a wall of the floor 18, and four side walls 19. Outside the cabin there is a device 12 for supporting and transporting a bicycle 15 so that the user can transport their own bicycle with them while they use the system 1. The transport device 12 comprises a retaining assembly 13 configured to stably receive and hold the front wheel 14 of the bicycle 15. As can be seen, this retaining assembly 13 overhangs a side wall 19 of the cabin 11 and, as known, the user must raise the bicycle 15 by the handlebar so as to house the front wheel 14 in the retaining assembly 13 configured. In this way, the bicycle 15 takes on a stable, vertical configuration that is basically parallel to the wall 19 during the journey. The retaining assembly 13 is connected to the wall of the cabin by a support assembly 16 that acts as a bridge between the cabin 11 and retaining assembly 13. In the following figures, details of this bridge support assembly 16 will be shown. Reference number 20 in Figure 2 identifies the second retaining assembly for the rear wheel 21 of the bicycle 15, i.e., one or more rest points placed vertically below the retaining assembly 13 of the front wheel 14. In this example, the two retaining assemblies 13 and 20 are at the ends of a shared frame structure 22 connected to the bridge support assembly 16. Finally, Figure 2 shows two tubular metallic verticals 23 with ends bound to the roof 17 and to the floor 18 that run along the wall 19 and that act as a support with other tubular metallic horizontals 24 for the end of the bridge support assembly 16 opposite the retaining assembly 13. The tubular verticals 23 are attached to the roof 17 and to the floor 18 using an upper plate 29 and a lower plate 30 that are integral with the ends of the same tubular verticals 23. In this way, the assembly of the transport device 12 on the cabin 11 is very simple (you just need to fix the above-mentioned plates 29, 30 to the cabin 11) and, in addition, the invention is also compatible and usable with existing systems already operating.

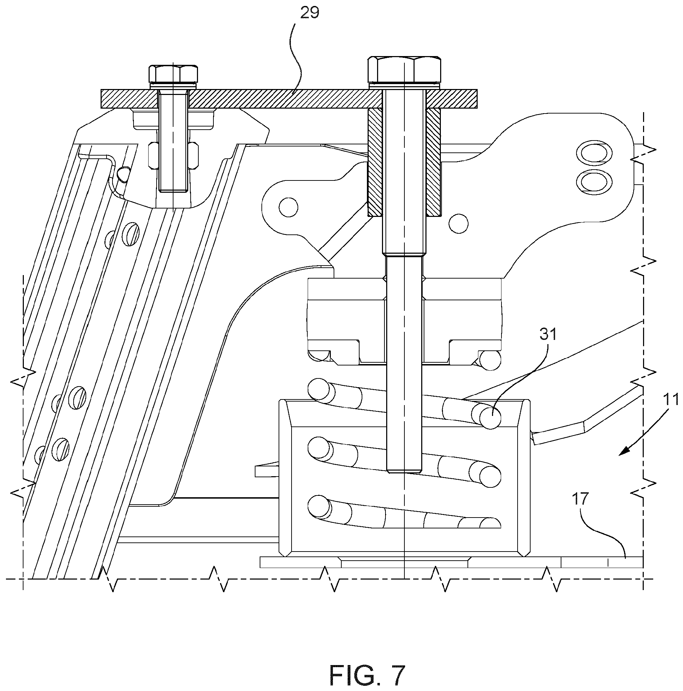

Figure 7 shows a preferred method for coupling the upper plate 29 to the roof 17 of the cabin 11 in which this coupling is spring mounted by means of a spring 31 placed between the roof 17 and the plate 29. This solution is advantageous because it makes it possible to absorb the vibrations that are generated in transport and to avoid the transfer of the forces and these vibrations inside the cabin 11.

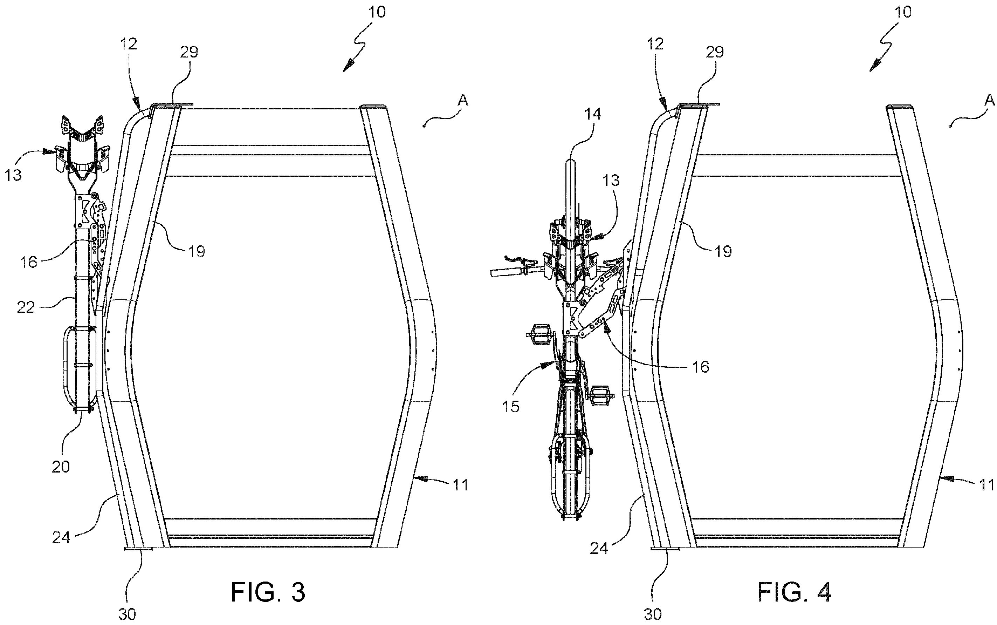

Figures 3 and 4 show two different possible configurations of the cabin assembly in Figure 2 according to this invention. As indicated in the general description of this invention, the innovative aspect of the cabin assembly 10 lies in the fact that the retaining assembly 13 is coupled (by means of the support assembly 16) in a mobile way to the cabin 11, in particular so as to be selectively switchable between a position distal from the cabin for loading, unloading, and transporting bicycles 15 and a position proximal to the cabin 11 for storing the cabin assembly 10. In this sense, Figure 3 shows a view wherein the retaining assembly 13 (and obviously everything attached to it like the second retaining assembly 20 and the structure 22) is very close to the wall 16 while Figure 4 shows a view wherein the retaining assembly 13 is distal from the wall 16. As described above, the distance in Figure 4 is such as to allow easy loading and unloading of the bicycle and to avoid hitting the handlebars or other parts of the bicycle against the cabin. In contrast, in the configuration in Figure 3, there is not enough distance to enable transport of a bicycle and the transverse dimension of the assembly 10 is greatly reduced with a view to optimising the storage of the cabin assembly 10.

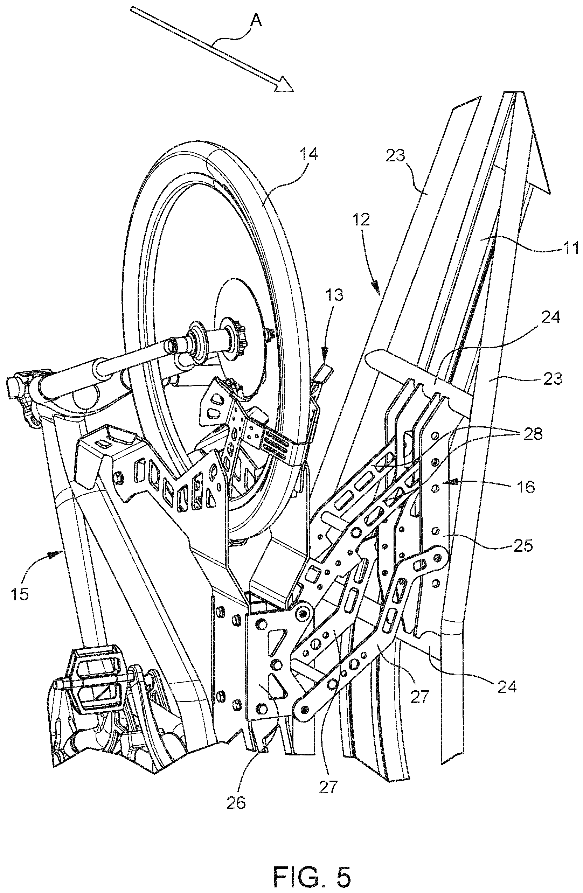

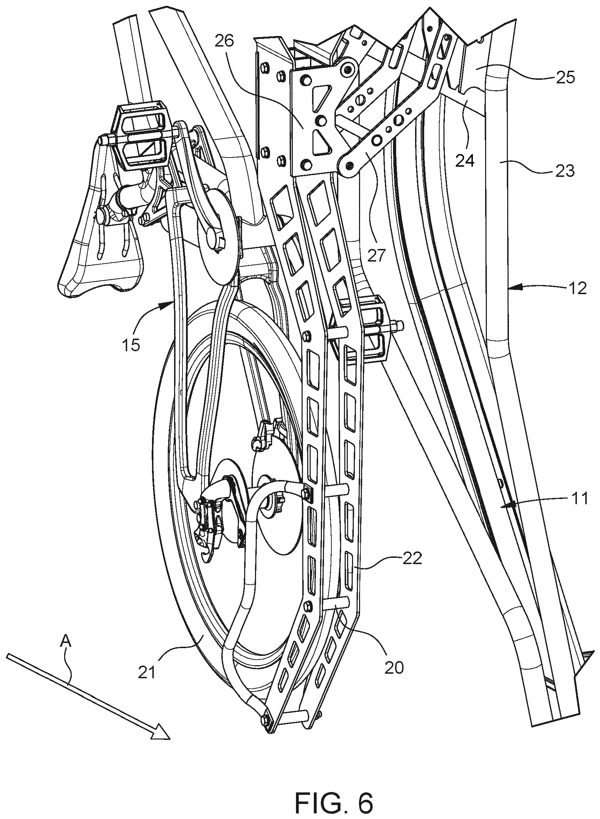

Figures 5 and 6 show enlarged details of the cabin assembly in Figure 2 according to this invention. In particular, Figure 5 shows an enlarged view that makes it possible to better describe the bridge support assembly 16 that connects the cabin 11 (via the outer frame mentioned above 23, 24) to the retaining assembly 13. Figure 5 also shows details of the retaining assembly 13 for which reference should be made to EP3984866 in the Applicant's name. In this figure, you can see how the bridge support assembly 16 is an articulated quadrilateral structure that comprises two parallel articulated quadrilaterals. Using the generally known terms to describe an articulated quadrilateral, the reference number 25 identifies what can be considered the bridge portion of the structure, i.e., the fixed part that, in this case, remains integral with the cabin 11 and parallel to the wall 19. The opposite portion that can be considered the rod portion of the structure is indicated with reference number 26 and is what, on the upper side, supports the retaining assembly 13 and, on the other side, supports the structure 22 up to the second retaining assembly 20. The rod portion 26 is also basically vertical and parallel to the wall 19 so that the quadrilateral may be an articulated parallelogram. The bridge 25 and the rod 26 are connected by a first 27 and second handle 28 using hinges at the ends. Thus, in this example, the rod 26 makes a rotational-translational movement in relation to the cabin 11, always remaining parallel to the bridge 25 so that the retaining assembly 13 is also always oriented correctly during the passage from the first to the second position.

Finally, Figure 6 makes it possible to note details of the structure 22 that connects the rod 26 to the second retaining assembly 20 that, in this case, is in the form of a simple, vertical rest surface with one or two contact points with the wheel 21.

Lastly, it is clear that modifications may be made to the invention described herein, without departing from the scope of the attached claims.

## Claims

1. A cabin assembly (10) for an aerial cable transportation system (1); wherein the cabin assembly (10) comprises a cabin (11) and at least one transport device (12) externally coupled to the cabin (11) for carrying sports equipment or personal belongings of passengers; wherein the transport device (12) comprises at least one retaining assembly (13) for sports equipment or personal belongings of passengers;
wherein
the retaining assembly (13) is movably coupled to the cabin (11) such that it is selectively switchable between a position distal from the cabin (11) for loading, unloading, and transporting the sports equipment or personal belongings of the passengers and a position proximal to the cabin (11) for storing the cabin assembly (10);
wherein the transport device (12) comprises a support assembly (16) for supporting the retaining assembly (13), wherein the support assembly (16) is coupled on one side to the cabin (11) and on the other side to the retaining assembly (13) and is configured to move the retaining assembly (13) from the proximal position to the distal position and vice versa;
wherein
the support assembly (16) comprises at least one articulated quadrilateral.

2. The cabin assembly (10) as claimed in claim 1, wherein the support assembly (16) comprises two parallel articulated quadrilaterals.

3. The cabin assembly (10) as claimed in any of the preceding claims, wherein the transport device (12) comprises an outer frame externally bound to the cabin (11), the support assembly being coupled to the cabin (11) via the outer frame.

4. The cabin assembly (10) as claimed in claim 3, wherein the outer frame comprises at least one vertical tubular body (23) extending from the roof to the floor of the cabin (11).

5. The cabin assembly (10) as claimed in claim 4, wherein the at least one vertical tubular body (23) is bound to the roof and to the floor of the cabin (11) via an upper plate (29) and a lower plate (30) integral with the ends of the vertical tubular body (23).

6. The cabin assembly (10) as claimed in claim 5, wherein at least the upper plate (29) is bound to the roof (17) of the cabin (11) in a sprung manner by means of at least one spring (31) interposed between the roof (17) of the cabin (11) and the upper plate (29).

7. The cabin assembly (10) as claimed in claim 4 or 5 or 6, wherein the outer frame comprises two parallel vertical tubular bodies (23) and at least two parallel horizontal tubular bodies (24) connecting the vertical tubular bodies and which are coupled to the support assembly (16).

8. The cabin assembly (10) as claimed in any preceding claim, wherein the retaining assembly (13) is a retaining assembly (13) for a bicycle wheel.

9. The cabin assembly (10) as claimed in any preceding claim, wherein the transport device (12) comprises two retaining assemblies (13) for the front wheel (14) and rear wheel of the bicycle (15), respectively.

10. An aerial cable transportation system, wherein the system (1) comprises at least one cable (2) and at least one cabin assembly (10) as claimed in any one of the preceding claims.

## Patentansprüche

1. Kabinenanordnung (10) für ein Luftseilbahntransportsystem (1); wobei die Kabinenanordnung (10) eine Kabine (11) und zumindest eine Transportvorrichtung (12) umfasst, die extern mit der Kabine (11) gekoppelt ist, um Sportausrüstung oder persönliche Gegenstände von Passagieren zu tragen; wobei die Transportvorrichtung (12) zumindest eine Halteanordnung (13) für Sportausrüstung oder persönliche Gegenstände von Passagieren umfasst;
wobei
die Halteanordnung (13) beweglich bzw. bewegbar mit der Kabine (11) gekoppelt ist, so dass sie selektiv zwischen einer von der Kabine (11) distalen Position zum Beladen, Entladen und Transportieren der Sportausrüstung oder persönlicher Gegenstände der Passagiere und einer von der Kabine (11) proximalen Position zum Lagern bzw. Verstauen der Kabinenanordnung (10) umschaltbar ist;
wobei die Transportvorrichtung (12) eine Traganordnung (16) zum Tragen der Halteanordnung (13) umfasst, wobei die Traganordnung (16) auf einer Seite mit der Kabine (11) und auf der anderen Seite mit der Halteanordnung (13) gekoppelt ist und konfiguriert ist, die Halteanordnung (13) von der proximalen in die distale Position und umgekehrt zu bewegen,
wobei die Traganordnung (16) zumindest ein Gelenkviereck umfasst.

2. Kabinenanordnung (10) nach Anspruch 1, wobei die Traganordnung (16) zwei parallele Gelenkvierecke umfasst.

3. Kabinenanordnung (10) nach einem der vorhergehenden Ansprüche, wobei die Transportvorrichtung (12) einen äußeren Rahmen umfasst, der extern mit der Kabine (11) verbunden ist, wobei die Traganordnung über den äußeren Rahmen mit der Kabine (11) gekoppelt ist.

4. Kabinenanordnung (10) nach Anspruch 3, wobei der äußere Rahmen zumindest einen vertikalen rohrförmigen Körper (23) umfasst, der sich von der Decke zu dem Boden der Kabine (11) erstreckt.

5. Kabinenanordnung (10) nach Anspruch 4, wobei der zumindest eine vertikale rohrförmige Körper (23) über eine obere Platte (29) und eine untere Platte (30), die mit den Enden des vertikalen rohrförmigen Körpers (23) integral sind, mit der Decke und dem Boden der Kabine (11) verbunden ist.

6. Kabinenanordnung (10) nach Anspruch 5, wobei zumindest die obere Platte (29) mittels zumindest einer zwischen der Decke (17) der Kabine (11) und der oberen Platte (29) angeordneten Feder (31) federnd mit der Decke (17) der Kabine (11) verbunden ist.

7. Kabinenanordnung (10) nach Anspruch 4, 5 oder 6, wobei der äußere Rahmen zwei parallele vertikale rohrförmige Körper (23) und zumindest zwei parallele horizontale rohrförmige Körper (24) umfasst, welche die vertikalen rohrförmigen Körper verbinden und die mit der Traganordnung (16) gekoppelt sind.

8. Kabinenanordnung (10) nach einem der vorhergehenden Ansprüche, wobei die Halteanordnung (13) eine Halteanordnung (13) für ein Fahrrad-Rad ist.

9. Kabinenanordnung (10) nach einem der vorhergehenden Ansprüche, wobei die Transportvorrichtung (12) zwei Halteanordnungen (13) für das Vorderrad (14) bzw. das Hinterrad des Fahrrads (15) umfasst.

10. Luftseilbahntransportsystem, wobei das System (1) zumindest ein Seil (2) und zumindest eine Kabinenanordnung (10) nach einem der vorhergehenden Ansprüche umfasst.

## Revendications

1. Ensemble cabine (10) pour système de transport par câble aérien (1); où l'ensemble cabine (10) comprend une cabine (11) et au moins un dispositif de transport (12) couplé extérieurement à la cabine (11) pour porter un équipement de sport ou des effets personnels de passagers; où le dispositif de transport (12) comprend au moins un ensemble de retenue (13) pour un équipement de sport ou des effets personnels de passagers;
où
l'ensemble de retenue (13) est couplé de manière mobile à la cabine (11) de sorte qu'il peut basculer sélectivement entre une position distale par rapport à la cabine (11) pour le chargement, le déchargement et le transport de l'équipement de sport ou des effets personnels des passagers et une position proximale par rapport à la cabine (11) pour le rangement de l'ensemble cabine (10);
où le dispositif de transport (12) comprend un ensemble support (16) pour supporter l'ensemble de retenue (13), où l'ensemble support (16) est couplé d'un côté à la cabine (11) et de l'autre côté à l'ensemble de retenue (13) et est configuré pour déplacer l'ensemble de retenue (13) de la position proximale à la position distale et inversement;
où
l'ensemble support (16) comprend au moins un quadrilatère articulé.

2. Ensemble cabine (10) selon la revendication 1, dans lequel l'ensemble support (16) comprend deux quadrilatères articulés parallèles.

3. Ensemble cabine (10) selon l'une quelconque des revendications précédentes, dans lequel le dispositif de transport (12) comprend un cadre extérieur lié à l'extérieur à la cabine (11), l'ensemble support étant couplé à la cabine (11) par l'intermédiaire du cadre extérieur.

4. Ensemble cabine (10) selon la revendication 3, dans lequel le cadre extérieur comprend au moins un corps tubulaire vertical (23) s'étendant du toit au plancher de la cabine (11).

5. Ensemble cabine (10) selon la revendication 4, dans lequel le au moins un corps tubulaire vertical (23) est lié au toit et au plancher de la cabine (11) par l'intermédiaire d'une plaque supérieure (29) et d'une plaque inférieure (30) solidaires des extrémités du corps tubulaire vertical (23).

6. Ensemble cabine (10) selon la revendication 5, dans lequel au moins la plaque supérieure (29) est liée au toit (17) de la cabine (11) de manière élastique au moyen d'au moins un ressort (31) interposé entre le toit (17) de la cabine (11) et la plaque supérieure (29).

7. Ensemble cabine (10) selon la revendication 4 ou 5 ou 6, dans lequel le cadre extérieur comprend deux corps tubulaires verticaux (23) parallèles et au moins deux corps tubulaires horizontaux (24) parallèles reliant les corps tubulaires verticaux et qui sont couplés à l'ensemble support (16).

8. Ensemble cabine (10) selon l'une quelconque des revendications précédentes, dans lequel l'ensemble de retenue (13) est un ensemble de retenue (13) pour une roue de bicyclette.

9. Ensemble cabine (10) selon l'une quelconque des revendications précédentes, dans lequel le dispositif de transport (12) comprend deux ensembles de retenue (13) pour la roue avant (14) et la roue arrière de la bicyclette (15), respectivement.

10. Système de transport par câble aérien, dans lequel le système (1) comprend au moins un câble (2) et au moins un ensemble cabine (10) selon l'une quelconque des revendications précédentes.
